# FASCICULE DE BREVET EUROPEEN

(11) **EP 2 239 087 B1**
(45) Date de publication et mention de la délivrance du brevet: **04.01.2012**
(21) Numéro de dépôt: 10159305.1
(22) Date de dépôt: 08.04.2010
(51) Int. Cl.: B23P 15/00, B60G 7/00, B62D 7/20, F16C 11/06

(54) **Procédé de fabrication d'une biellette de direction**
Verfahren zur Herstellung einer Spurstange
Method for manufacturing a tie rod

(30) Priorité: 09.04.2009 FR 0952324
(43) Date de publication de la demande: 13.10.2010
(73) Titulaire: Jtekt Europe, 69540 Irigny (FR)
(72) Inventeur: Lagnien, Olivier, 69480 Morance (FR); Kessler, Daniel, 69150 Decines Charpieu (FR); Stutz, Dominique, 07430 Davezieux (FR)
(74) Mandataire: Chevalier, Renaud Philippe

(56) Documents cités:
- DE-A1- 4 319 076
- JP-A- 5 170 128
- JP-A- 2001 259 784
- JP-A- 2002 130 248
- US-A- 6 038 771

## Description

La présente invention concerne, de façon générale, les mécanismes de direction à crémaillère pour véhicules automobiles. Plus particulièrement, cette invention porte sur un procédé de fabrication de la partie biellette de direction du mécanisme de direction. Un tel procédé est connu du document US 6 038 771.

Dans une direction à crémaillère de véhicule automobile, un pignon de direction est lié en rotation avec la colonne de direction, manoeuvrée à l'aide du volant de conduite du véhicule, ce pignon venant en prise avec une crémaillère montée coulissante, suivant sa direction longitudinale, dans un carter de direction. Les deux extrémités opposées de la crémaillère, extérieures au carter, sont accouplées à deux biellettes de direction associées respectivement aux roues directrices droite et gauche du véhicule, les biellettes assurant la liaison entre la crémaillère et chacun des porte-fusée par l'intermédiaire d'une rotule de direction. Chacun des porte-fusée est quant à lui solidaire du moyeu de roue et articulé en rotation autour de l'axe de rotation de celle-ci ; généralement cet axe suit l'axe d'alignement de la suspension de la roue du véhicule. Ainsi, la rotation du volant dans un sens ou dans l'autre, donc la rotation correspondante du pignon de direction, est convertie en une translation correspondante de la crémaillère qui, par l'intermédiaire des biellettes, des rotules de direction et des porte-fusée, provoque elle-même l'orientation des roues du véhicule, pour un braquage à droite ou à gauche.

Dans une telle direction à crémaillère, la liaison articulée entre chaque extrémité de la crémaillère et la biellette correspondante est une liaison à rotule, dite rotule « axiale », réalisée par un boîtier de rotule axiale solidaire de l'extrémité de la crémaillère, et par un pivot de rotule axiale à tête sphérique, solidaire de la biellette et monté tournant en tous sens dans le boîtier de rotule axiale.

Compte tenu de la mobilité de la crémaillère relativement au carter de direction fixé au châssis du véhicule, et de l'orientation variable de la biellette relativement à l'extrémité de la crémaillère mobile en translation dans le carter de direction, la protection de la crémaillère et de la rotule axiale de direction est habituellement assurée par un soufflet de biellette, qui relie l'extrémité adjacente du carter de direction à la biellette correspondante, en recouvrant l'extrémité de la crémaillère (extérieure au carter) et la rotule axiale. Une extrémité annulaire du soufflet est fixée autour de l'extrémité du carter de direction au moyen d'un premier collier d'attache, serré autour de cette extrémité. L'autre extrémité annulaire du soufflet forme une lèvre radiale qui vient s'insérer dans une gorge annulaire usinée sur la biellette. Le soufflet est ensuite définitivement retenu sur la biellette au moyen d'un second collier d'attache, serré autour de cette autre extrémité.

Ainsi fixé, le soufflet assure l'étanchéité dans l'intervalle entre le carter de direction et la gorge annulaire de la biellette, rendant ainsi inutile dans cet intervalle l'application d'un revêtement anticorrosion.

Entre ses deux extrémités ainsi attachées, le soufflet possède un certain nombre de spires, qui permettent l'allongement ou le raccourcissement de ce soufflet selon la position de la crémaillère relativement au carter de direction, et qui autorisent aussi une flexion du même soufflet, en fonction de l'orientation variable prise par la biellette grâce à l'articulation à rotule.

La biellette de direction prise individuellement comprend sur l'une de ses extrémités la tête sphérique formant le pivot pour la rotule axiale assurant l'articulation de la biellette avec la crémaillère de direction, la gorge destinée à aider au maintien du soufflet de direction et un filetage sur l'autre de ses extrémités prévu pour recevoir le boîtier de rotule de direction réalisant la liaison avec le porte-fusée.

Selon l'état de la technique, le procédé de fabrication de cette biellette nécessite la réalisation d'un certain nombre d'étapes à effectuer dans un certain ordre. Ces étapes comprennent :
- le forgeage du pivot de la rotule axiale, qui lui confère une forme sphérique brute non définitive,
- le roulage du filetage prévu pour la fixation du boîtier de la rotule de direction,
- l'usinage de la gorge annulaire prévue pour tenir le soufflet,
- un traitement de surface par l'application d'un revêtement anticorrosion dans la gorge et sur la partie non protégée par le soufflet, et
- l'usinage de la sphère du pivot de la rotule axiale.

Ce procédé classique de fabrication perturbe le flux de production. En effet, l'usinage de la gorge intervient à la suite de l'opération de forgeage et avant l'application d'un revêtement de surface. Le roulage quant à lui consiste à appliquer un effort sur la biellette via une molette de forme prédéfinie afin de faire fluer la matière pour obtenir la forme désirée.

Une opération d'usinage est très différente des deux autres corps de métier (forgeage et application de revêtement) et devrait être effectuée en même temps que l'usinage de la sphère du pivot de la rotule axiale. Cependant, cela entraînerait l'inconvénient de devoir faire un nouveau traitement de surface de la gorge annulaire car la sphère du pivot qui sera recouverte par le soufflet ne doit pas être traitée.

La présente invention vise à améliorer ce procédé de fabrication en harmonisant les opérations de fabrication afin de gagner en productivité.

A cet effet, l'invention a pour objet un procédé de fabrication d'une biellette de direction de véhicule automobile comportant une tête sphérique formant pivot pour une rotule axiale afin de réaliser l'articulation de ladite biellette avec une crémaillère de direction, ainsi qu'une gorge destinée à aider au maintien d'un soufflet de direction d'un véhicule et un filetage destiné à recevoir un boîtier d'un rotule de direction, caractérisé en ce qu'il comprend dans cet ordre les étapes de :
- forgeage du pivot de la rotule axiale,
- roulage du filetage,
- roulage de la gorge,
- traitement de surface par application d'un revêtement anti-corrosion, et
- usinage de la sphère de la liaison pivot par tous procédés d'usinage hormis celui de forgeage et de roulage.

Ce procédé permet de grouper les mêmes opérations de fabrication. Un même corps de métier ne voit ainsi passer la même biellette qu'une seule fois. Le flux est alors simplifié et les corps de métier sont regroupés dans le flux : forgeage, roulage, traitement anticorrosion et usinage.

Selon une particularité du même mode de fabrication, l'application du revêtement anticorrision est effectuée uniquement dans la gorge et sur les zones apparentes de la biellette lorsque le soufflet de direction est monté sur la biellette.

Ce mode opératoire permet d'économiser en revêtement et en temps de fabrication puisqu'il n'est pas nécessaire d'appliquer le revêtement sur toute la surface de la biellette.

Selon un mode de réalisation, une seconde gorge est roulée simultanément à la première gorge.

Cette seconde gorge de la biellette, réalisée en amont de la première gorge sur une zone non couverte par le soufflet sert au réglage du parallélisme du véhicule.

De toute façon, l'invention sera mieux comprise à l'aide de la description qui suit, en référence au dessin schématique annexé représentant, à titre d'exemple, une forme d'exécution de cette biellette de direction résultant du procédé de fabrication selon l'invention l'une par rapport à l'autre.

La figure 1 est une vue partielle de profil d'une biellette de direction issue du procédé selon l'invention.

La figure 2 représente une vue partielle agrandie sur une zone périphérique de la biellette comportant les gorges issues du roulage.

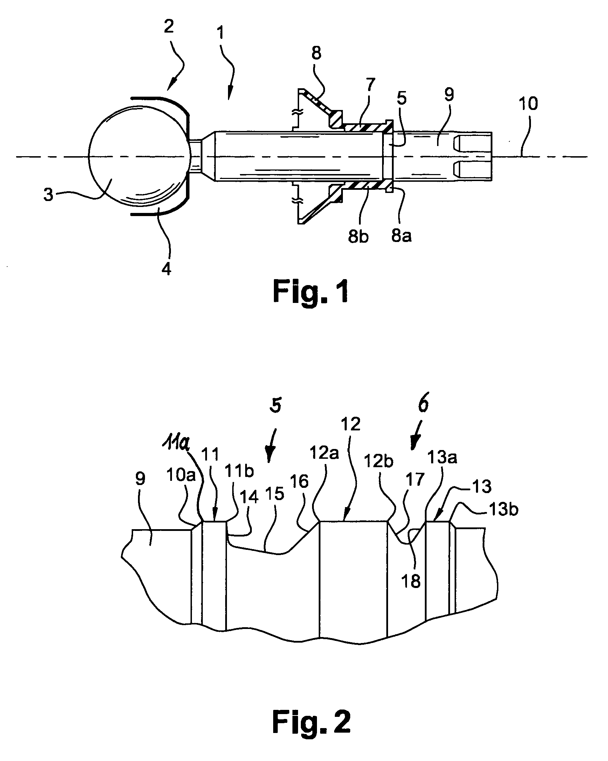

Telle qu'illustrée à la figure 1, une biellette 1 de direction issue du procédé selon l'invention comporte un corps 9 de forme cylindrique dont l'une des extrémités comprend une sphère 3 formant pivot pour former une liaison pivot ou rotule 2 avec une sphère femelle 4 située en terminaison d'un bras de crémaillère (non illustré). Les deux sphères : mâle 3 et femelle 4 sont ainsi complètement liées en translation mais laissées libres en rotation l'une par rapport à l'autre.

La sphère mâle 3 est forgée dans un premier temps afin de lui conférer une forme approximative, elle est mieux définie lors d'une ultime étape d'usinage décrite plus bas.

L'autre extrémité (non représentée) de la biellette 1 comporte un filetage nécessaire à la fixation du boîtier de la rotule de direction (non représentée) et de son contre-écrou.

Comme illustré à la figure 2, une gorge annulaire 5 est creusée transversalement à l'axe 10 du corps 9 de la biellette 1. Cette gorge 5 est obtenue par la technique connue en soi du roulage utilisant une molette ou des galets, qui lui confère une forme particulière et crée des surépaisseurs ou bourrelets 11, 12 de matière de part et d'autre de cette gorge 5 par l'action d'une molette ou galets de forme complémentaire à la forme désirée. Comme montré à la figure 2, ces bourrelets 11, 12 présentent respectivement des extrémités 11a, 11b et 12a, 12b.

Ainsi, cette gorge 5 présente une première rampe 14 s'étendant abruptement à partir de l'extrémité 11 b du premier bourrelet 11 en direction de l'axe 10 du corps 9 de la biellette 1. Cette première rampe 14 se prolonge par une seconde rampe 15 s'étendant également en direction de l'axe 10 du corps de la biellette 1 mais avec une pente beaucoup plus douce. Enfin, cette seconde rampe 15 se prolonge par une troisième rampe 16 s'étendant en direction de l'extrémité 12a du second bourrelet 12 issu du roulage.

Dans le mode de réalisation illustré à la figure 2, une seconde gorge annulaire 6 est également obtenue par roulage et creusée transversalement à l'axe 10 du corps 9 de la biellette 1. La formation de cette seconde gorge génère un troisième bourrelet 13 et contribue à la formation du second bourrelet 12. Cette seconde gorge annulaire 6 présente une première rampe 17 s'étendant en direction de l'axe 10 du corps 9 de la biellette 1 et une seconde rampe 18 prolongeant la première rampe 17 et s'étendant en direction de l'extrémité 13a du troisième bourrelet 13.

Les trois bourrelets 11, 12, 13 de révolution issus de roulage sont eux aussi roulés au cours de la même étape de roulage des gorges 5, 6 afin de leur conférer une surface dont le profil est sensiblement parallèle à l'axe 10 du corps 9 de la biellette 1. Les extrémités 11 a et 13b respectivement des deux bourrelets 11 et 13 sont biseautées toujours au cours de cette même étape de roulage.

Les deux gorges 5, 6, les différents bourrelets 11, 12, 13 ainsi que le filetage (non représenté) en extrémité de biellette 1 sont générés et façonnés selon l'invention au cours de la même étape de roulage.

Un traitement de surface par application d'un revêtement anticorrosion est ensuite appliqué dans la gorge annulaire 5 et sur toutes les zones de la biellette 1 en aval de cette gorge 5 c'est-à-dire depuis cette gorge 5 jusqu'au filetage d'extrémité nécessaire à la fixation du boîtier de la rotule de direction (non représenté).

Toujours selon l'invention, ce n'est qu'après cette étape de traitement de surface que la sphère pivot 3 est définitivement usinée afin de lui conférer sa forme définitive propre à son insertion dans la sphère femelle 4 ou boîtier de rotule formant la terminaison de la crémaillère.

Cet usinage englobe tous procédés d'usinage hormis celui de forgeage et de roulage. Il peut par exemple être réalisé par décolletage.

Après cette dernière étape, le procédé de fabrication de la biellette est terminé.

Lors du montage de la biellette 1 dans le véhicule, un soufflet 8 (représenté partiellement) vient recouvrir l'ensemble du corps 9 de la biellette 1 se trouvant en amont de la première gorge annulaire 5. Ce soufflet 8 est fixé par l'une de ses extrémités sur le carter de direction (non illustré) à l'aide d'un collier de fixation et possède sur son autre extrémité une lèvre annulaire 8a venant s'insérer dans la gorge annulaire 5 du corps 9 de la biellette 1.

Cette lèvre 8a par son insertion par déformation élastique dans la gorge annulaire 5 est capable à elle seule de maintenir en translation l'extrémité du soufflet 8 sur le corps 9 de la biellette 1.

Ce soufflet 8 comprend également en amont de cette lèvre 8a une zone 8b dont la surface intérieure comporte des rainures annulaires 7 et s'étend une fois monté sensiblement selon la direction de l'axe 10 du corps 9 de la biellette 1. Cette zone 8b de diamètre sensiblement égal au diamètre initial du corps 9 de la biellette 1 n'ayant pas subi de roulage, entoure le corps 9 de la biellette 1. Un serrage par collier sur cette zone 8b du soufflet 8 est ainsi plus efficace grâce à la déformation élastique du soufflet 8 en caoutchouc autour du corps 9 de la biellette 1. Ce serrage contribue efficacement au maintien de l'extrémité du soufflet 8 sur le corps 9 de la biellette 1.

Chacune de ces fixations laisse libre la biellette 1 en rotation, ce qui est important pour le réglage du parallélisme qui consistera à diminuer ou à augmenter la distance entre la liaison pivot 2 et le point de fixation du boîtier de la rotule de direction (non illustrée) reliée au porte-fusée par vissage ou dévissage de la biellette 1 dans la rotule de direction afin de rendre parallèle l'orientation des deux roues directionnelles. Cette opération est facilitée par la présence de la seconde gorge annulaire 6 sur le corps 9 de la biellette 1 qui permettra de repérer la position en rotation de la biellette 1 à l'aide d'un marquage spécifique.

Le procédé d'obtention de la biellette de direction objet de l'invention, est applicable aux systèmes de direction assistée électrique ou hydraulique, ainsi qu'aux systèmes de direction manuelle (c'est-à-dire sans assistance) et, plus généralement, à tous les types de direction à crémaillère utilisables dans le domaine des véhicules automobiles.

Comme il va de soi, l'invention ne se limite pas aux seules étapes de procédé de cette biellette 1 de direction pour véhicule automobile qui ont été décrites ci-dessus à titre d'exemples ; elle en embrasse, au contraire, toutes les variantes de réalisation et d'application, dans le cadre des revendications, quels que soient notamment :
- la forme des gorges annulaires 5, 6 ;
- l'ajout d'étapes supplémentaires à celles décrites pour la fabrication de la biellette.

## Revendications

1. Procédé de fabrication d'une biellette de direction (1) de véhicule automobile comportant une tête sphérique (3) formant pivot pour une rotule axiale (2) afin de réaliser l'articulation de ladite biellette (1) avec une crémaillère de direction, ainsi qu' une gorge (5) destinée à aider au maintien d'un soufflet de direction (8) d'un véhicule et un filetage destiné à recevoir un boîtier d'un rotule de direction, **caractérisé en ce qu'**il comprend dans cet ordre les étapes de :
- forgeage du pivot de la rotule axiale (2),
- roulage du filetage,
- roulage de la gorge (5),
- traitement de surface par application d'un revêtement anticorrosion, et
- usinage de la sphère (3) de la liaison pivot par tous procédés d'usinage hormis celui de forgeage et de roulage.

2. Procédé de fabrication selon la revendication 1 dans lequel l'application du revêtement anti-corrision est effectuée uniquement dans la gorge (5) et sur les zones apparentes de la biellette (1) lorsque le soufflet de direction (8) est monté sur la biellette (1).

3. Procédé de fabrication selon l'une des revendications 1 ou 2 dans lequel une seconde gorge (6) est roulée simultanément à la première gorge (5).

## Claims

1. A method for manufacturing a motor vehicle tie rod (1) including a spherical head (3) forming a pivot for an axial ball joint (2) in order to articulate said rod (1) with a steering rack, as well as a groove (5) intended to help maintain a steering boot (8) of a vehicle and a thread intended to receive a case of a steering ball joint, **characterized in that** it comprises, in the order below, the following steps:
- forging the pivot of the axial ball joint (2),
- rolling the thread,
- rolling the groove (5),
- treating the surface by applying an anti-corrosion coating, and
- machining the sphere (3) of the pivot connection using all machining methods except forging and rolling.

2. The manufacturing method according to claim 1, wherein the application of the anti-corrosion coating is done only in the groove (5) and on the visible areas of the rod (1) when the steering boot (8) is mounted on the rod (1).

3. The manufacturing method according to one of claims 1 or 2, wherein a second groove (6) is rolled at the same time as the first groove (5).

## Patentansprüche

1. Verfahren zur Herstellung einer Spurstange (1) eines Kraftfahrzeugs, die einen runden Kopf (3) aufweist, der für ein axiales Kugelgelenk (2) den Drehpunkt bildet, um die Schwenkbarkeit der Stange (1) mit einer Lenkzahnstange zu realisieren, sowie eine Kehle (5), die dazu bestimmt ist, den Halt einer Lenkmanschette (8) eines Fahrzeugs zu unterstützen und ein Gewinde, das dazu bestimmt ist, ein Gehäuse eines Lenk-Kugelgelenks aufzunehmen, **dadurch gekennzeichnet, dass** es in dieser Reihenfolge die Schritte umfasst:
- Schmieden des Drehpunkts des axialen Kugelgelenks (2),
- Walzen des Gewindes,
- Walzen der Kehle (5),
- Behandlung der Oberfläche durch Aufbringen einer Antikorrosionsbeschichtung, und
- Bearbeiten des Kopfes (3) der Drehpunktverbindung mit allen Bearbeitungsverfahren, wobei Schmieden und Walzen ausgenommen sind.

2. Herstellungsverfahren nach Anspruch 1, wobei das Aufbringen der Antikorrosionsbeschichtung nur in der Kehle (5) und auf den sichtbaren Zonen der Stange (1) erfolgt, wenn die Lenkmanschette (8) auf der Stange (1) montiert ist.

3. Herstellungsverfahren nach einem der Ansprüche 1 oder 2, wobei gleichzeitig mit der ersten Kehle (5) eine zweite Kehle (6) gewalzt wird.
